# EUROPÄISCHE PATENTSCHRIFT

(11) **EP 3 648 339 B1**
(45) Veröffentlichungstag und Bekanntmachung des Hinweises auf die Patenterteilung: **12.01.2022**
(21) Anmeldenummer: 18204022.0
(22) Anmeldetag: 02.11.2018
(51) Int. Cl.: H02S 20/25, E04D 1/30

(54) **SOLARDACHABDECKUNG**
SOLAR ROOF COVER
COUVERTURE DE TOITURE SOLAIRE

(43) Veröffentlichungstag der Anmeldung: 06.05.2020
(73) Patentinhaber: Meto-Fer Automation AG, 2540 Grenchen (CH)
(72) Erfinder: MÜLLER, Ernst, 2540 Grenchen (CH)
(74) Vertreter: EGLI-EUROPEAN PATENT ATTORNEYS

(56) Entgegenhaltungen:
- EP-A1- 2 975 760
- WO-A1-2009/121062
- DE-A1- 2 806 810
- DE-U1-202009 002 209
- JP-A- 2000 223 729
- JP-A- 2005 072 101
- US-A1- 2007 157 963
- US-A1- 2008 302 031

## Beschreibung

Die vorliegende Erfindung betrifft eine Solardachabdeckung mit einer Mehrzahl von Solardachziegeln.

Solardachziegel sind beispielsweise aus der Druckschrift DE 197 39 948 A1 bekannt. Diese Solardachziegel bestehen aus herkömmlichen Dachziegeln, auf die fotovoltaische Zellen aufgebracht sind. Die Dachziegel werden wie herkömmliche Dachziegel verlegt. Die Solardachziegel weisen separate Verbindungen auf, über die der Stromkreis geschlossen wird.

Die herkömmlich bekannten Solardachziegel werden wie gewöhnliche Dachziegel (d.h. Dachziegel ohne fotovoltaische Zellen) verlegt, um ein Dach damit zu decken. In der Regel erfolgt das Verlegen durch Einhängen in die Dachlattung. Bei der Montage müssen zusätzlich zum Verlegen der Dachziegel die fotovoltaischen Zellen miteinander elektrisch verbunden werden, was mittels Kabel, Stecker und ähnlichen Verbindungselementen erfolgen kann. Die Montage derartiger Solardachziegel ist daher aufwendig und mit einem hohen Zeit- und Kostenaufwand verbunden. Dies ist nicht nur dann problematisch, wenn ein Dach mit derartigen Solardachziegeln neu gedeckt werden soll, sondern auch dann, wenn am Dach Reparatur- oder Instandhaltungsarbeiten durchzuführen sind, welche beispielsweise den Austausch von Solardachziegeln erforderlich machen. Andere Solardachabdeckungen sind ferner aus JP 2005072101 A, JP 2000223729 A und DE 202009002209 U1 bekannt.

Eine der vorliegenden Erfindung zugrundeliegende Aufgabe besteht darin, die genannten Nachteile zu vermeiden sowie eine verbesserte Solardachabdeckung bereitzustellen.

Diese Aufgabe wird gelöst durch eine Solardachabdeckung gemäss Patentanspruch 1 . Weiterbildungen der Erfindung sind in den Unteransprüchen angegeben.

Bei dem Solardachziegel der erfindungsgemässen Solardachabdeckung handelt es sich um einen Solardachziegel mit fotovoltaischen Zelle oder einem fotovoltaischen Modul. Der Solardachziegel ist ausgebildet, mit mindestens einem Montageblock, der mit einem Dachtragwerk verbindbar ist, verbunden zu werden. Dabei ist der Solardachziegel so mit dem Montageblock verbindbar, dass der Solardachziegel mit einem anderen Solardachziegel, der mit demselben Montageblock verbunden ist, eine mechanische und elektrische Verbindung eingeht.

Bei der erfindungsgemässen Solardachabdeckung handelt es sich um eine Solardachabdeckung zum Befestigen auf einem Dachtragwerk, wobei die Solardachabdeckung insbesondere zum Ausbilden eines regendichten Solardachs auf einem Dachtragwerk befestigt wird. Die Solardachabdeckung umfasst eine Mehrzahl von Solardachziegeln, die jeweils fotovoltaische Zellen oder ein fotovoltaisches Modul aufweisen. Die Solardachabdeckung umfasst ferner eine Mehrzahl von Montageblöcken. Zum Befestigen der Solardachabdeckung auf dem Dachtragwerk sind dabei die Montageblöcke mit dem Dachtragwerk und die Solardachziegel mit den Montageblöcken verbindbar. Zum Befestigen der Solardachabdeckung auf dem Dachtragwerk ist dabei zumindest ein Teil der Solardachziegel so mit den Montageblöcken verbindbar, dass jeweils zwei Solardachziegel mit demselben Montageblock eine mechanische und elektrische Verbindung eingehen.

Mit der erfindungsgemässen Solardachabdeckung lässt sich in kurzer Montagezeit auf relativ einfache Weise ein Solardach herstellen, da erfindungsgemäss Montageblöcke vorgesehen sind, die in vorteilhafter Weise mehrere Funktionen vereinen. Zum einen werden über die Montageblöcke die Solardachziegel mit dem Dachtragwerk verbunden. Darüber hinaus werden über die Montageblöcke die Solardachziegel miteinander mechanisch verbunden. Zusätzlich werden über die Montageblöcke die Solardachziegel miteinander auch elektrisch verbunden.

Dadurch, dass ein Montageblock erfindungsgemäss mehrere verschiedene Aufgaben erfüllt, werden für die Montage eines Solardachs wenige verschiedene Bauteile benötigt, was nicht nur die Montage weiter vereinfacht, sondern auch für die Herstellung, die Lagerhaltung und den Vertrieb vorteilhaft ist.

Dadurch, dass Solardachziegel erfindungsgemäss über die Montageblöcke miteinander elektrisch verbindbar sind, sind dafür keine zusätzlichen Kabel oder Leiterbahnen erforderlich. Die Verwendung von zusätzlichen Kabeln oder Leiterbahnen wäre nicht nur aufwändig, sondern auch teuer. Kabelverbindungen sind ferner aufgrund der notwendigen Kabelstecker fehleranfällig. Durch den Wegfall eines Teils der konventionell vorgesehenen Kabelverbindungen kann durch die Verwendung der erfindungsgemässen Solardachabdeckung auch die Fehleranfälligkeit des Solardachs verringert werden.

Dadurch, dass die Solardachziegel der erfindungsgemässen Solardachabdeckung nicht unmittelbar auf einem Dachtragwerk befestigt werden, sondern die Verwendung eines Montageblocks vorgesehen ist, wird ausserdem die Hinterlüftung der Solardachsziegel verbessert.

Die erfindungsgemässe Solardachabdeckung dient dazu, ein Dach damit zu decken und auf diese Weise ein Solardach herzustellen. Dazu wird die Solardachabdeckung auf einem Dachtragwerk befestigt. Unter einem "Dachtragwerk" wird das Tragwerk eines Daches, insbesondere das Tragwerk eines Gebäudedaches verstanden. Für ein Dachtragwerk ist auch die Bezeichnung "Dachkonstruktion" geläufig. Bei dem Dachtragwerk kann es sich im Rahmen der Erfindung beispielsweise um das Dachgerüst eines Sparren- oder Pfettendachs handeln. Es sind jedoch auch alle anderen Dachkonstruktionen möglich, die geeignet sind, mit Dachziegeln gedeckt zu werden. Dazu zählen grundsätzlich auch Flächentragwerke oder Kombinationen aus Flächen- und Gerüsttragwerken. Bevorzugt weist das Dachtragwerk Dachlatten auf.

Eine fotovoltaische Zelle wird auch als "Solarzelle" oder "PV-Zelle" bezeichnet. Im Rahmen der Erfindung können beispielsweise monokristalline und/oder polykristalline und/oder amorphe fotovoltaische Zellen verwendet werden. Mehrere in geeigneter Weise miteinander verschaltete fotovoltaische Zellen ergeben ein fotovoltaisches Modul (auch als "Solarmodul" oder "PV-Modul" bezeichnet). Grundsätzlich können im Rahmen der Erfindung alle elektrischen Bauelemente verwendet werden, die Strahlung in elektrische Energie umwandeln können und die im Kontext dieser Beschreibung alle als fotovoltaische Zellen bzw. fotovoltaische Module bezeichnet werden.

Der Wortbestandteil "Ziegel" impliziert keine Einschränkung hinsichtlich des Materials, aus dem der Solardachziegel der erfindungsgemässen Solardachabdeckung besteht. Insbesondere muss der Solardachziegel nicht aus gebrannten Ton bestehen. Beispielsweise können für die Herstellung des Solardachziegels Kunststoffe, Metalle, Glas und andere Materialien verwendet werden. Des Weiteren impliziert der Wortbestandteil "Ziegel" keine Einschränkung hinsichtlich der Form.

Durch die Verwendung von Solardachziegeln anstelle von grossflächigen Solarpaneelen ergibt sich eine einfachere Handhabung, beispielsweise bei deren Lagerung und deren Transport. Darüber hinaus kann bei der Verwendung von Solardachziegeln ein grosser Teil einer Dachfläche für die Stromerzeugung genutzt werden, während Solarpaneele üblicherweise standardisierte Abmessungen aufweisen, die es oft nicht erlauben, eine Dachfläche vollständig mit Solarpaneelen zu bedecken. Ausserdem wird ein mit Solardachziegeln gedecktes Dach von vielen Konsumenten aus ästhetischen Gesichtspunkten gegenüber einem mit grossflächigen Solarpaneelen gedeckten Solardach bevorzugt.

Bevorzugt sind alle Solardachziegel der Solardachabdeckung so mit den Montageblöcken verbindbar, dass jeweils zwei Solardachziegel mit demselben Montageblock eine mechanische und elektrische Verbindung eingehen.

Bevorzugt ist ein Montageblock so ausgebildet, dass er zum Verbinden mit dem Dachtragwerk mit einer Dachlatte des Dachtragwerks verbunden wird. Weiter bevorzugt ist es in diesem Zusammenhang, dass die Dachlatten des Dachtragwerks mindestens eine Nut aufweisen, welche insbesondere nach oben (d.h. in Richtung zum Dachfirst) offen ist. Ein Montageblock weist dann mindestens einen Vorsprung oder mindestens einen Spund auf, der in die Nut einer Dachlatte eingeführt wird, um die Verbindung herzustellen. Besonders bevorzugt ist die Dachlatte dabei eine hölzerne Dachlatte, welche durch einen Fräsvorgang besonders einfach mit einer Nut versehen werden kann. Alternativ können auch sowohl in der Dachlatte als auch im Montageblock Nuten vorgesehen sein, wobei die Verbindung dann über eine Feder erfolgt. Alternativ oder zusätzlich zu der Verbindung über eine Nut oder mehrere Nuten können auch Befestigungselemente wie beispielsweise Schrauben, Nieten, Nägel oder Bolzen vorgesehen sein, um einen Montageblock mit einer Dachlatte zu verbinden. Es ist im Rahmen der Erfindung möglich, an verschiedenen Stellen des Dachs verschiedene Arten der Verbindung zwischen Montageblock und Dachtragwerk zu wählen.

Bevorzugt sind zwei Solardachziegel, die mit demselben Montageblock eine mechanische und elektrische Verbindung aufweisen, elektrisch in Serie geschaltet. Da in diesem Fall lediglich eine einfache elektrische Verbindung zwischen diesen beiden Solardachziegeln erforderlich ist, lässt sich die Schaltung in Serie schaltungstechnisch sehr einfach realisieren. Es ist im Rahmen der Erfindung auch möglich, dass die Solardachziegel der Solardachabdeckung parallel oder teilweise in Serie und teilweise parallel geschaltet sind.

Ein Solardachziegel der erfindungsgemässen Solardachabdeckung weist bevorzugt mehrere fotovoltaische Zellen auf. Die fotovoltaischen Zellen eines Solardachziegels bilden dabei bevorzugt ein fotovoltaisches Modul, insbesondere ein fotovoltaisches Modul aus 3x3 fotovoltaischen Zellen.

Bevorzugt weist zumindest ein Teil der Solardachziegel der Solardachabdeckung ein Schutzelement auf, um die fotovoltaische Zelle oder das fotovoltaische Modul vor auftretenden Überspannungen zu schützen. Das Schutzelement kann auch dazu dienen, Leistungsverluste bei Teilabschattung der Solardachabdeckung und/oder bei teilweiser Funktionsstörung der fotovoltaischen Zellen bzw. Module zu verhindern. Als Schutzelement kann dabei insbesondere eine Freilaufdiode verwendet werden, welche zur fotovoltaischen Zelle oder zum fotovoltaischen Modul parallel geschaltet ist.

Erfindungsgemäss weist mindestens ein Teil der Solardachziegel mindestens ein mechanisches Verbindungselement auf. Erfindungsgemäss weist auch mindestens ein Teil der Montageblöcke mindestens ein mechanisches Verbindungselement auf. Bevorzugt weisen alle Solardachziegel und alle Montageblöcke der Solardachabdeckung jeweils mindestens zwei mechanische Verbindungselemente auf.

In einem bevorzugten Ausführungsbeispiel sind die mechanischen Verbindungselemente zumindest teilweise als Steckverbindungselemente ausgeführt. Mittels Steckverbindungselementen lässt sich ein Solardachziegel beispielsweise schnell und einfach mit einem Montageblock verbinden.

In einem weiteren bevorzugten Ausführungsbeispiel sind die mechanischen Verbindungselemente zumindest teilweise als Schnappverbindungselemente ausgeführt. Mittels Schnappverbindungselementen lässt sich ein Solardachziegel beispielsweise schnell, einfach und sicher mit einem Montageblock verbinden.

Steck- und Schnappverbindungselemente haben beispielsweise den zusätzlichen Vorteil, dass sie eine Verbindung bilden, die auf einfache Weise wieder gelöst werden kann, was Instandsetzungsarbeiten an einem Solardach oder die Demontage eines Solardachs wesentlich vereinfachen kann.

Bevorzugt sind die mechanischen Verbindungselemente im Bereich des Randabschnitts der Solardachziegel angeordnet, der den oberen (firstseitigen) Randabschnitt bildet, wenn die Solardachabdeckung auf dem Dachtragwerk befestigt ist. Dadurch wird beispielsweise eine stabile und sichere Montage der Solardachziegel ermöglicht.

Um einen Solardachziegel mit einem Montageblock mechanisch zu verbinden, wirkt bevorzugt mindestens ein mechanisches Verbindungselement des Solardachziegels mit mindestens einem mechanischen Verbindungselement des Montageblocks zusammen. Dazu sind die jeweiligen Verbindungselemente zueinander komplementär ausgebildet, d.h. insbesondere so, dass sie zusammen eine formschlüssige und/oder kraftschlüssige und/oder formschlüssige Verbindung ergeben können. Im erfindungsgemässen Fall von Steck- oder Schnappverbindungelementen werden Verbindungselemente beispielsweise ineinander gesteckt, im Fall von Schnappverbindungselementen kommt es ausserdem bevorzugt zu einer Verrastung.

Bevorzugt weist mindestens ein Teil der Solardachziegel mindestens ein elektrisches Verbindungselement auf. Bevorzugt weist auch mindestens ein Teil der Montageblöcke mindestens ein elektrisches Verbindungselement auf. Mehr bevorzugt weisen alle Solardachziegel und alle Montageblöcke der Solardachabdeckung jeweils mindestens zwei elektrische Verbindungselemente auf.

Bevorzugt sind die elektrischen Verbindungselemente zumindest teilweise als Steckverbindungselemente, d.h. als Kombination aus Steckern und Buchsen, ausgeführt. Mittels Steckverbindungselementen lässt sich ein Solardachziegel schnell und einfach mit einem Montageblock verbinden.

Bevorzugt sind die elektrischen Verbindungselemente im Bereich des Randabschnitts der Solardachziegel angeordnet, der den oberen (firstseitigen) Randabschnitt bildet, wenn die Solardachabdeckung auf dem Dachtragwerk befestigt ist.

Um einen Solardachziegel mit einem Montageblock ausserdem elektrisch zu verbinden, wirkt bevorzugt mindestens ein elektrisches Verbindungselement des Solardachziegels mit mindestens einem elektrischen Verbindungselement des Montageblocks zusammen. Dazu sind die jeweiligen Verbindungselemente zueinander komplementär ausgebildet, d.h. so, dass sie zusammen eine elektrisch leitende Verbindung ergeben können.

Bevorzugt sind die elektrischen Verbindungselemente der Solardachziegel und/oder der Montageblöcke in die jeweiligen mechanischen Verbindungselemente integriert.

Es ist im Rahmen der Erfindung auch möglich, dass es sich bei den mechanischen und den elektrischen Verbindungselementen um dieselben Bauteile handelt, sodass durch das Zusammenwirken von Verbindungselementen nicht nur eine mechanische Verbindung sondern auch eine elektrische Verbindung hergestellt wird. Um dies zu ermöglichen, können beispielsweise die mechanischen Verbindungselemente aus einem elektrisch leitfähigen Material hergestellt sein. Als elektrisch leitfähige Materialien kommen beispielsweise metallische Werkstoffe in Betracht. Zusätzlich sind die Verbindungselemente mit je einem Pol der fotovoltaischen Zelle bzw. des fotovoltaischen Moduls oder mit je einem Ende eines im Montageblock angeordneten elektrischen Leiters kontaktiert.

In einem bevorzugten Ausführungsbeispiel weist zumindest ein Teil der Solardachziegel jeweils mindestens zwei mechanische Verbindungselemente auf. Diese Verbindungselemente eines Solarziegels werden nachfolgend auch als "erste mechanische Verbindungselemente" bezeichnet. Die ersten mechanischen Verbindungselemente sind dabei besonders bevorzugt auf der der fotovoltaischen Zelle oder dem fotovoltaischen Modul gegenüberliegenden Seite eines Solardachziegels angeordnet. Ferner weist auch zumindest ein Teil der Montageblöcke jeweils mindestens zwei mechanische Verbindungselemente auf. Diese Verbindungselemente eines Montageblocks werden nachfolgend auch als "zweite mechanische Verbindungselemente" bezeichnet. Je ein erstes mechanisches Verbindungselement ist zu je einem zweiten mechanischen Verbindungselement komplementär. Jeweils zwei Solardachziegel sind mit einem Montageblock mechanisch verbindbar, indem ein erstes mechanisches Verbindungselement der einen der zwei Solardachziegel und ein erstes mechanisches Verbindungselement der anderen der zwei Solardachziegel mit komplementären zweiten mechanischen Verbindungselementen ein und desselben Montageblocks verbunden werden. Gemäss diesem Ausführungsbeispiel können beispielsweise zwei Solardachziegel mit ein und demselben Montageblock mechanisch verbunden werden. Ferner können zwei Montageblöcke mit ein und demselben Solardachziegel mechanisch verbunden werden.

In einem weiteren bevorzugten Ausführungsbeispiel weist zumindest ein Teil der Solardachziegel jeweils mindestens zwei elektrische Verbindungselemente auf. Diese Verbindungselemente eines Solarziegels werden nachfolgend auch als "erste elektrische Verbindungselemente" bezeichnet. Die ersten elektrischen Verbindungselemente sind dabei besonders bevorzugt auf der der fotovoltaischen Zelle oder dem fotovoltaischen Modul gegenüberliegenden Seite eines Solardachziegels angeordnet. Ferner weist auch zumindest ein Teil der Montageblöcke jeweils mindestens zwei elektrische Verbindungselemente auf. Diese Verbindungselemente eines Montageblocks werden nachfolgend auch als "zweite elektrische Verbindungselemente" bezeichnet. Je ein erstes elektrisches Verbindungselement ist zu je einem zweiten elektrischen Verbindungselement komplementär. Jeweils zwei Solardachziegel sind mit einem Montageblock elektrisch verbindbar, indem ein erstes elektrisches Verbindungselement der einen der zwei Solardachziegel und ein erstes elektrisches Verbindungselement der anderen der zwei Solardachziegel mit komplementären zweiten elektrischen Verbindungselementen ein und desselben Montageblocks verbunden werden. Gemäss diesem Ausführungsbeispiel können beispielsweise zwei Solardachziegel mit ein und demselben Montageblock elektrisch verbunden werden. Ferner können zwei Montageblöcke mit ein und demselben Solardachziegel elektrisch verbunden werden.

Bevorzugt weist zumindest ein Teil der Solardachziegel eine Grundplatte und eine zumindest teilweise lichtdurchlässige Deckplatte auf, wobei die fotovoltaische Zelle oder das fotovoltaische Modul zwischen Grundplatte und Deckplatte angeordnet ist. Auf diese Weise ist die fotovoltaische Zelle bzw. das fotovoltaische Modul beispielsweise vor Verwitterung, Hagelschlag und anderen schädlichen Einflüssen geschützt.

In einem bevorzugten Ausführungsbeispiel der Erfindung wird beim Befestigen der Solardachabdeckung auf dem Dachtragwerk mindestens eine Reihe gebildet. Die Reihe umfasst mindestens zwei, insbesondere mehr als zwei Solardachziegel und mindestens einen, insbesondere mehr als einen Montageblock. Der erste und der zweite der Solardachziegel der Reihe sind mit dem ersten der Montageblöcke der Reihe elektrisch und mechanisch verbunden. Der vorletzte und die letzte der Solardachziegel der Reihe sind mit dem letzten der Montageblöcke der Reihe elektrisch und mechanisch verbunden. Die jeweils benachbarten Solardachziegel der Reihe sind mit jeweils einem Montageblock der Reihe elektrisch und mechanisch verbunden. Die Anzahl der Montageblöcke der Reihe ist um 1 geringer als die Anzahl der Solardachziegel der Reihe. Die Zählung der Solardachziegel und der Montageblöcke ("erster", "zweiter", ..., "vorletzter", "letzter") erfolgt dabei entlang der Reihe, d.h. im Fall einer horizontal angeordneten Reihe von links nach rechts oder umgekehrt. Wenn die Reihe beispielsweise vier Solardachziegel umfasst, gilt Folgendes: Der erste und der zweite Solardachziegel sind mit dem ersten Montageblock verbunden, der zweite und der dritte Solardachziegel sind mit dem zweiten Montageblock verbunden und der dritte (vorletzte) und vierte (letzte) Solardachziegel sind mit dem dritten (letzten) Montageblock verbunden.

Weiter bevorzugt ist der erste Solardachziegel der Reihe mit einem Startelement elektrisch und mechanisch verbunden. Weiter bevorzugt ist der letzte Solardachziegel mit einem Stoppelement mechanisch und elektrisch verbunden. Besonders bevorzugt weisen Startelement und Stoppelement jeweils eine elektrische Anschlussstelle der Serie der der elektrisch in Serie geschalteten Solardachziegel auf.

Weiter bevorzugt sind das Startelement und das Stoppelement im Wesentlichen gleich ausgebildet wie ein Montageblock. Im Unterschied zu einem Montageblock ist ein Startelement bzw. ein Stoppelement jedoch nur mit einem Solardachziegel verbunden. ein Start- oder Stoppelement weist nur ein elektrisches Verbindungselement für einen Solardachziegel auf, welches mit einem Anschluss elektrisch leitend verbunden ist. Die Anschlüsse von Start- und Stoppelement stellen bevorzugt den Anfangs- und Endkontakt der Reihe dar. An den Anschlüssen kann beispielsweise eine Stopfbuchse für einen Kabelanschluss montiert werden.

Besonders bevorzugt werden beim Befestigen der Solardachabdeckung auf dem Dachtragwerk mehrere Reihen gebildet, die zueinander beispielsweise in Serie geschaltet sind.

Erfindungsgemäss weist zumindest ein Teil der Solardachziegel mindestens einen auf der der fotovoltaischen Zelle oder dem fotovoltaischen Modul gegenüberliegenden Seite angeordneten Niederhalter auf, der ausgebildet ist, mit einer Dachlatte und/oder einem Rand eines anderen Solardachziegels in Eingriff gebracht zu werden. Durch den Niederhalter ist es beispielsweise möglich, einen Solardachziegel präzise und sicher zu montieren.

Es ist im Rahmen der Erfindung möglich, dass die Solardachabdeckung neben Solardachziegeln auch Passivdachziegel umfasst. Passivdachziegel sind Dachziegel ohne fotovoltaische Zelle und ohne fotovoltaisches Modul. Bevorzugt können die Passivdachziegel wie Solardachziegel mit Montageblöcken verbunden werden.

Bevorzugt können die Passivdachziegel in beliebiger Form und Grösse zugeschnitten werden. Dadurch ist es beispielsweise möglich, die Passivdachziegel und damit die Solardachabdeckung insgesamt an Dachschrägen, Dachfenster, Aussparungen für Schornsteine etc. anzupassen.

Weitere Einzelheiten und Zweckmässigkeiten der Erfindung sowie insbesondere beispielhafte Ausführungsbeispiele der erfindungsgemässen Solardachabdeckung werden im Folgenden unter Bezugnahme auf die beigefügten Zeichnungen beschrieben. Die einzelnen Merkmale der Ausführungsbeispiele können, soweit sinnvoll, und im Rahmen einer beanspruchten Solardachabdeckung, beliebig miteinander kombiniert werden.
Fig. 1 zeigt eine perspektivische Ansicht eines Solardachziegels gemäss eines Ausführungsbeispiels der Erfindung.
Fig. 2 zeigt eine andere perspektivische Ansicht der Solardachabdeckung gemäss dieses Ausführungsbeispiels.
Fig. 3 zeigt eine Schnittansicht eines Teils einer Solardachabdeckung gemäss dieses Ausführungsbeispiels.
Fig. 4 zeigt eine andere Schnittansicht eines Teils der Solardachabdeckung gemäss dieses Ausführungsbeispiels.
Fig. 5 zeigt eine perspektivische Ansicht eines Teils der Solardachabdeckung gemäss dieses Ausführungsbeispiels.
Fig. 6 zeigt eine Schnittansicht eines Teils einer Solardachabdeckung gemäss eines weiteren Ausführungsbeispiels der Erfindung.
Fig. 7 zeigt eine andere Schnittansicht eines Teils der Solardachabdeckung gemäss dieses weiteren Ausführungsbeispiels.

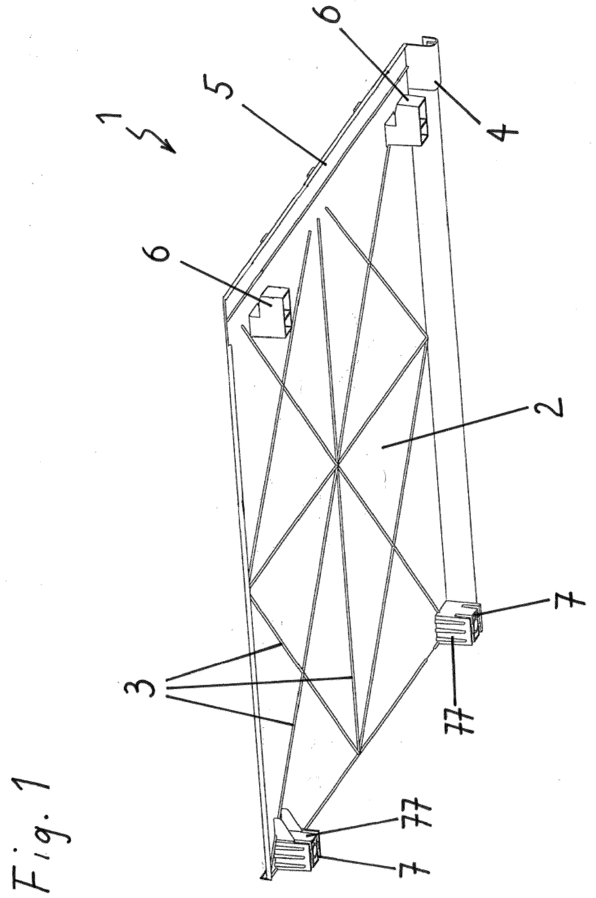

In Fig. 1 ist eine perspektivische Ansicht eines Solardachziegels 1 gemäss eines Ausführungsbeispiels der Erfindung dargestellt. Die Darstellung zeigt die Rückseite bzw. Unterseite des Solardachziegels. Der Solardachziegel 1 weist eine Grundplatte 2 auf, die beispielsweise aus Kunststoff bestehen kann.

Bevorzugt an der Rückseite bzw. Unterseite des Solardachziegels 1 können optional Versteifungen 5 angebracht sein, um die Stabilität des Solardachziegels 1 zu erhöhen. Die Versteifungen 5 können beispielsweise als Rippen oder Sicken ausgebildet sein.

Optional kann der Solardachziegel 1 im Bereich zumindest eines seitlichen Randes einen Ablaufkanal 4 aufweisen. Optional kann der Solardachziegel 1 im Bereich zumindest eines seitlichen Randes eine Tropfkante 5 aufweisen. Wenn die Solardachziegel 1 einer Solardachabdeckung einen Ablaufkanal 4 und/oder eine Tropfkante 5 aufweisen, kann eine verbesserte Dichtheit der Solardachabdeckung erreicht werden, da Regen und Schmelzwasser über die Tropfkante 5 bzw. den Ablaufkanal 4 gezielt in eine Dachrinne oder ein Abflussrohr geleitet werden können.

Der Solardachziegel 1 weist ferner bevorzugt zwei Niederhalter 6 auf. Ein derartiger Niederhalter 6 ist dazu bestimmt, bei der Montage des Solardachziegels 1 mit einer Dachlatte 11 und/oder einem Rand eines anderen Dachziegels in Eingriff gebracht zu werden. Bevorzugt wird der Niederhalter dabei durch Einhaken mit der Dachlatte bzw. dem anderen Dachziegel, insbesondere einem anderen Solardachziegel 1 in Eingriff gebracht. Es ist im Rahmen der Erfindung auch möglich, dass der Solardachziegel lediglich einen Niederhalter 6 oder mehr als zwei Niederhalter 6 aufweist.

Der Solardachziegel 1 weist ferner mechanische Verbindungselemente 7 und elektrische Verbindungselemente auf. Durch diese Verbindungselemente kann der Solardachziegel 1 mit Montageblöcken, die weiter unten näher beschrieben werden, mechanisch und elektrisch verbunden werden. Die Verbindungselemente des Solardachziegels 1 können in einem Gehäuse 77 untergebracht sein.

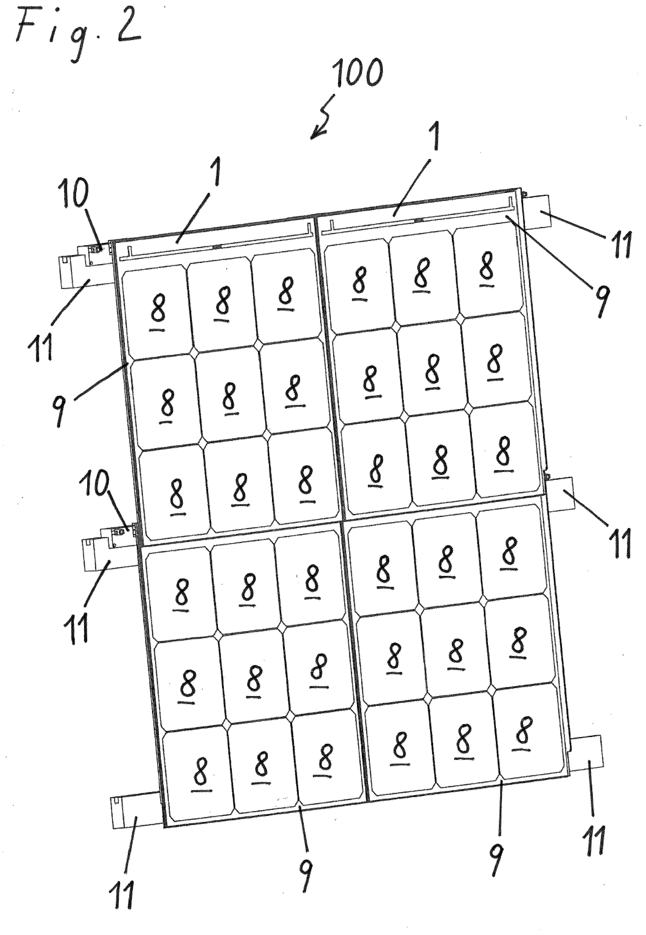

In Fig. 2 ist eine perspektivische Ansicht einer Solardachabdeckung 100 gemäss einem Ausführungsbeispiel der Erfindung dargestellt. Die Solardachabdeckung 100 umfasst mehrere Solardachziegel 1. In der Darstellung sind beispielhaft vier Solardachziegel 1 gezeigt. Eine Solardachabdeckung 100 kann auch weniger als vier oder bevorzugt mehr als vier Solardachziegel 1 umfassen.

Auf ihrer Vorderseite bzw. Oberseite umfassen die Solardachziegel 1 jeweils mindestens eine fotovoltaische Zelle 8. In der Darstellung sind beispielhaft 3x3 fotovoltaische Zellen 8 pro Solardachziegel 1 gezeigt, die gemeinsam ein fotovoltaisches Modul bilden. Ein Solardachziegel 1 kann auch eine andere Anzahl oder eine andere Anordnung an fotovoltaischen Zellen 8 umfassen. Ferner können die Solardachziegel 1 auf ihrer Vorderseite bzw. Oberseite jeweils eine Deckplatte 9 umfassen. Die fotovoltaischen Zellen 8 befinden sich dann zwischen der Grundplatte 2 und der Deckplatte 9. Die Deckplatte 9 besteht bevorzugt aus Glas oder lichtdurchlässigem Kunststoff. Die Deckplatte 9 und die Grundplatte 2 sind bevorzugt wasserdicht miteinander verbunden, beispielsweise, indem sie miteinander verschweisst oder verklebt oder laminiert sind.

Zusätzlich zu den Solardachziegeln 1 umfasst die Solardachabdeckung 100 Montageblöcke 10. Die Montageblöcke 10 sind mit einem Dachtragwerk verbindbar. Insbesondere sind die Montageblöcke 10 mit Dachlatten 11 eines Dachtragwerks verbindbar. Das Dachtragwerk und die Dachlatten 11 sind nicht Bestandteil der erfindungsgemässen Solardachabdeckung 100. Die Dachlatte wird aber mit einer speziellen Nut versehen, in die dann der Montageblock 10 passt.

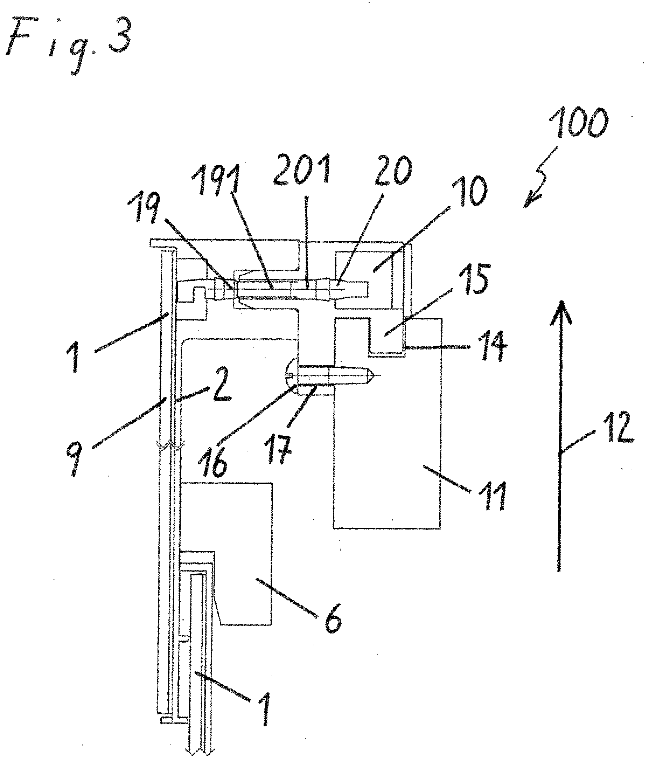

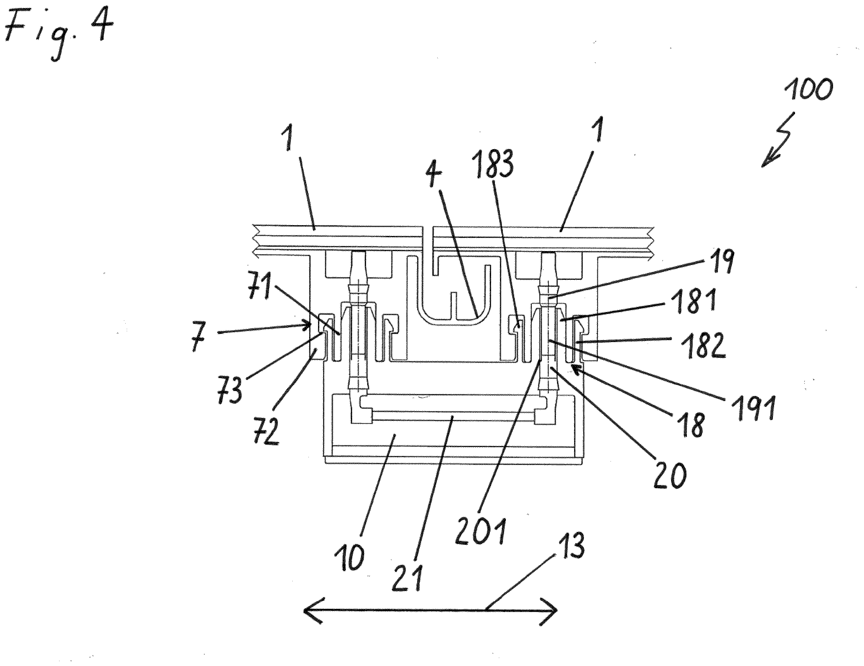

Die Solardachziegel 1 sind mit den Montageblöcken 10 verbindbar. Die Art und Weise der Verbindung gemäss dem Ausführungsbeispiel wird insbesondere anhand der Figuren 3 und 4 beschrieben.

In den Figuren 2 bis 5 ist die Solardachabdeckung 100 dieses Ausführungsbeispiels in einem montierten Zustand dargestellt, d.h. in einem Zustand, in dem die Montageblöcke 10 mit dem Dachtragwerk und die Solardachziegel 1 mit den Montageblöcken 10 verbunden sind. Die Erfindung ist jedoch nicht auf diesen Zustand beschränkt. Bevorzugt bilden die Solardachabdeckung 100 im montierten Zustand gemeinsam mit dem Dachtragwerk und etwaigen weiteren Dachbestandteilen ein Solardach.

In den Figuren 3 und 4 sind Schnittansichten eines Teils der Solardachabdeckung 100. Der Pfeil 12 in Fig. 3 gibt die Richtung zum Dachfirst an. Der Pfeil 13 in Fig. 4 gibt eine Richtung quer dazu an, insbesondere die Richtung parallel zum Dachfirst.

Eine Dachlatte 11 weist bevorzugt eine Nut 14 auf, die in Richtung zum Dachfirst offen ist. Der Montageblock 10 weist bevorzugt einen entsprechenden Vorsprung 15 (Spund) auf, der in die Nut 14 eingeführt wird, um den Montageblock 10 in der Dachlatte 11 einzuhängen. Der Montageblock 10 kann zusätzlich mittels eines Befestigungselements 16 mit dem Dachtragwerk verbunden werden. Als Befestigungselement 16 kann beispielsweise eine Schraube dienen, welche durch ein im Montageblock 10 vorgesehenes Loch 17 geführt und in das Dachtragwerk, insbesondere in eine Dachlatte 11 eingeschraubt wird. Als Befestigungselemente 16 können beispielsweise auch Nägel, Nieten, Bolzen, Klettverschlüsse etc. verwendet werden. Es ist im Rahmen der Erfindung grundsätzlich auch möglich, einen Klebstoff wie beispielsweise ein doppelseitig klebendes Klebeband als Befestigungselement 16 zu verwenden. Es ist im Rahmen der Erfindung auch möglich, den Montageblock 10 ausschliesslich mittels eines Befestigungselements 16 wie beispielsweise einer Schraube oder ausschliesslich über eine Nut 14 mit dem Dachtragwerk zu verbinden.

Die Montageblöcke 10 weisen mechanische Verbindungselemente 18 auf, die zu den mechanischen Verbindungselementen 7 der Solardachziegel 1 komplementär sind. Die mechanischen Verbindungselemente 7 der Solardachziegel 1 werden nachfolgend auch als "erste mechanische Verbindungselemente" 7 bezeichnet. Die mechanischen Verbindungselemente der Montageblöcke 10 werden nachfolgend auch als "zweite mechanische Verbindungselemente" 18 bezeichnet.

Die ersten mechanischen Verbindungselemente 7 sind bevorzugt als Steckverbindungselemente 71, 72 und weiter bevorzugt zumindest teilweise zusätzlich als Schnappverbindungselemente 73 ausgeführt. Unter einer Schnappverbindung wird bevorzugt eine einrastende (formschlüssige) Steckverbindung verstanden. Die Schnappverbindung kann reversibel (zerstörungsfrei lösbar) oder irreversibel (nicht zerstörungsfrei lösbar) sein. Zusätzlich können beispielsweise auch magnetische oder andere, bevorzugt lösbare Verbindungselemente vorgesehen sein.

Die zweiten mechanischen Verbindungselemente 18 sind bevorzugt als Steckverbindungselemente 181, 182 und weiter bevorzugt zumindest teilweise zusätzlich als Schnappverbindungselemente 183 ausgeführt.

Die zweiten mechanischen Verbindungselemente 18 sind zu den ersten mechanischen Verbindungselementen 7 komplementär. Das bedeutet im Fall einer Steckverbindung beispielsweise, dass ein zweites mechanisches Verbindungselement 18 so ausgebildet ist, dass es in ein erstes mechanisches Verbindungselement 7 eingeführt werden kann, um eine Verbindung herzustellen. Es ist auch der umgekehrte Fall möglich, d.h. dass zum Herstellen einer Steckverbindung ein erstes mechanisches Verbindungselement 7 in ein zweites mechanisches Verbindungselement 18 eingeführt wird. Auch Kombinationen davon sind denkbar.

Bevorzugt rasten die mechanischen Verbindungselemente 7, 18 beim Herstellen der Verbindung miteinander ein, beispielsweise indem ein Vorsprung 183 eines zweiten Verbindungselements 182 in einer Vertiefung 73 eines ersten Verbindungselements 72 einschnappt.

In Fig. 3 ist dargestellt, dass der Niederhalter 6 in Eingriff mit dem in Richtung zum Dachfirst oberen Rand eines anderen Solardachziegels 1 in Eingriff steht. Dadurch ist der obere Solardachziegel 1 so am unteren Solardachziegel 1 eingehakt, dass eine stabile Montage des Solardachziegels 1 gewährleistet ist und bevorzugt ferner eine gute Hinterlüftung des Solardachs gegeben ist.

Die Montageblöcke 10 weisen elektrische Verbindungselemente 20 auf, die zu den elektrischen Verbindungselementen 19 der Solardachziegel 1 komplementär sind. Die elektrischen Verbindungselemente 19 der Solardachziegel 1 werden nachfolgend auch als "erste elektrische Verbindungselemente" 7 bezeichnet. Die elektrischen Verbindungselemente der Montageblöcke 10 werden nachfolgend auch als "zweite elektrische Verbindungselemente" 20 bezeichnet.

Die ersten elektrischen Verbindungselemente 19 sind bevorzugt als Steckverbindungselemente ausgeführt.

Die zweiten elektrischen Verbindungselemente 20 sind bevorzugt ebenfalls als Steckverbindungselemente ausgeführt.

Die zweiten elektrischen Verbindungselemente 20 sind zu den ersten elektrischen Verbindungselementen 19 komplementär. Das bedeutet im Fall einer Steckverbindung beispielsweise, dass ein erstes elektrisches Verbindungselement 19 so ausgebildet ist, dass es in ein zweites elektrisches Verbindungselement 20 eingeführt werden kann, um eine elektrisch leitende Verbindung herzustellen. Dabei ist es bevorzugt, dass das zweite elektrische Verbindungselement 20 eine Buchse 201 und das erste elektrische Verbindungselement 19 einen passenden Stecker 191 aufweist.

Es ist auch der umgekehrte Fall möglich, dass zum Herstellen einer Steckverbindung ein zweites elektrisches Verbindungselement 20 in ein erstes elektrisches Verbindungselement 19 eingeführt wird. Auch Kombinationen davon sind denkbar.

Im dargestellten Ausführungsbeispiel sind die elektrischen Verbindungselemente 19, 20 in die mechanischen Verbindungselemente 7, 18 integriert. Die elektrischen Verbindungselemente 19, 20 befinden sich im Inneren der mechanischen Verbindungselemente 7, 18. Dadurch ist es besonders einfach, gleichzeitig eine elektrische und eine mechanische Verbindung zwischen einem Solardachziegel 1 und einem Montageblock 10 herzustellen, da die elektrischen Verbindungselemente 19, 20 zwangsläufig miteinander in Kontakt treten, wenn die mechanische Verbindung mittels der mechanischen Verbindungselemente 7, 18 hergestellt wird. Dadurch ist es ferner möglich, eine sichere elektrische Verbindung herzustellen, welche vor dem Auftreten von Fehlkontakten, Wackelkontakten und Beschädigungen geschützt ist. Darüber hinaus sind die empfindlichen elektrischen Kontakte der elektrischen Verbindungselemente 19, 20 vor und während der Montage durch die mechanischen Verbindungselemente 7, 18 optimal geschützt.

Alternativ sind die ersten elektrischen Verbindungselemente 19 nicht in die ersten mechanischen Verbindungselemente 7 integriert, sondern von diesen getrennt auf dem Solardachziegel 1 angeordnet. In diesem Fall sind ferner auch die zweiten elektrischen Verbindungselemente 20 nicht in die zweiten mechanischen Verbindungselemente 18 integriert, sondern von diesen getrennt auf dem Montageblock 10 angeordnet. Bevorzugt ist es jedoch, die elektrischen Verbindungselemente 19, 20 in die jeweiligen mechanischen Verbindungselemente 7, 18 zu integrieren.

Die zweiten elektrischen Verbindungselemente 20 eines Montageblocks 10 sind miteinander elektrisch leitend verbunden. Dazu ist beispielsweise im Inneren des Montageblocks ein Kabel oder Leiterstrang 21 angeordnet, an welchen die zweiten elektrischen Verbindungselemente 20 angeschlossen sind. Beispielsweise sind die zweiten elektrischen Verbindungselemente 20 an das Kabel bzw. den Leiterstrang 21 angelötet oder gekrimpt.

In Fig. 4 sind zwei Solardachziegel 1 dargestellt, welche mit demselben Montageblock 10 mechanisch und elektrisch verbunden sind. Durch die elektrischen Verbindungselemente 19, 20 und das Kabel bzw. den Leiterstrang 21 sind diese Solardachziegel 1 miteinander in Serie geschaltet.

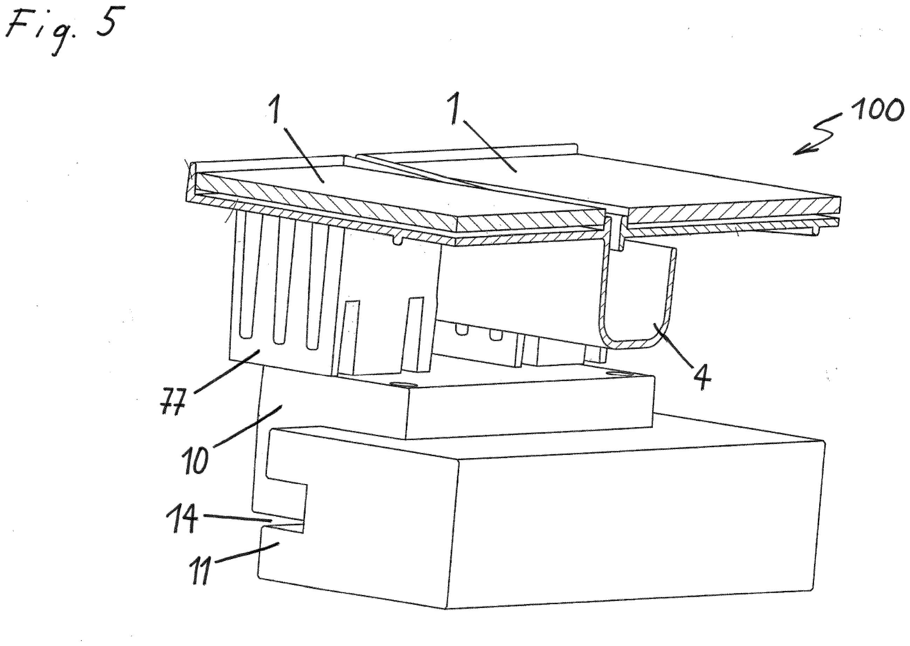

In Fig. 5 ist eine perspektivische Ansicht eines Teils der Solardachabdeckung 100 dargestellt. Fig. 5 zeigt einen Abschnitt einer Dachlatte 11 mit einer Nut 14, einen Montageblock 10 und Teile der beiden Solardachziegel 1, welche mit dem Montageblock 10 mechanisch und elektrisch verbunden sind.

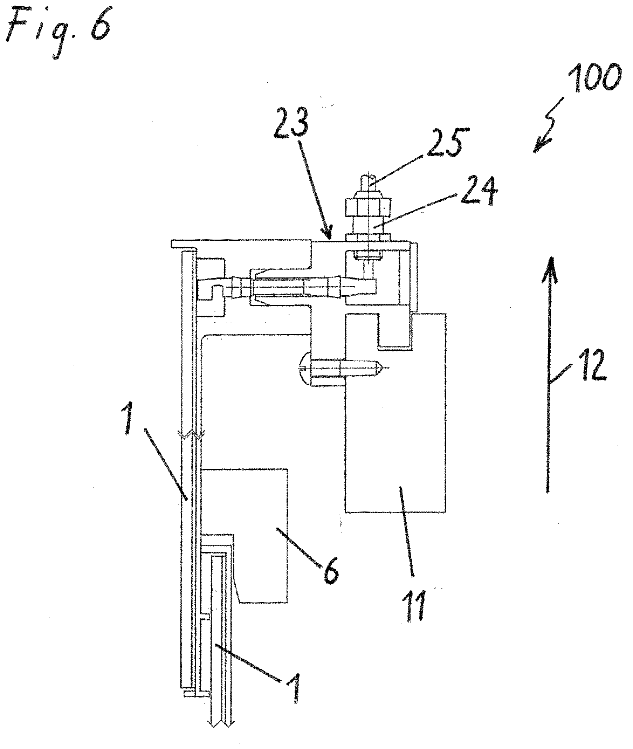

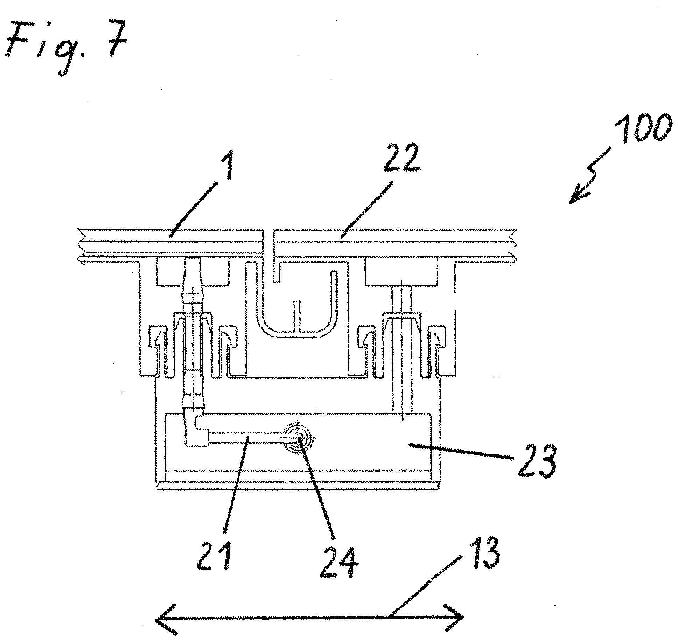

In den Figuren 6 und 7 ist ein Teil einer Solardachabdeckung 100 gemäss einem weiteren Ausführungsbeispiel der Erfindung im Schnitt dargestellt. Die Solardachabdeckung 100 ist dabei in einem montierten Zustand dargestellt.

In dem weiteren Ausführungsbeispiel umfasst die Solardachabdeckung neben Solardachziegeln 1 mindestens einen Passivdachziegel 22. Der Passivdachziegel 22 enthält keine fotovoltaischen Zellen.

Die Grösse und die Form des Passivdachziegels 22 sind bevorzugt veränderbar, insbesondere durch Zuschneiden oder Zersägen. Dadurch ist es möglich, die Dachabdeckung 100 an die vorgegebenen Abmessungen des Daches, welches mit der Solardachabdeckung 100 gedeckt werden soll, anzupassen. Ferner ist dadurch eine Anpassung an Dachfenster, Dachgauben, Schornsteine und andere bauliche Einrichtungen des Daches möglich. Durch den Einsatz von Passivdachziegeln 22 ist es daher beispielsweise möglich, auf die Verwendung von Solardachziegeln 1 mit Sonderformen und/oder Sondergrössen zu verzichten.

Bevorzugt weist ein Passivdachziegel 22 erste mechanische Verbindungselemente 7 auf, die den ersten mechanischen Verbindungselementen 7 eines Solardachziegels 1 entsprechen. Da ein Passivdachziegel 22 keine fotovoltaischen Zellen aufweist, weist er bevorzugt auch keine ersten elektrischen Verbindungselemente 19 auf.

Der Fig. 7 dargestellte Solardachziegel 1 und der Passivdachziegel 22 sind mit einem Start- oder Stoppelement 23 verbunden. Das Start- oder Stoppelement 23 ist gleich aufgebaut wie ein Montageblock 10, wobei das Start- oder Stoppelement 23 im Unterschied zu einem Montageblock 10 lediglich ein zweites elektrisches Verbindungselement 20 aufweist. Im montierten Zustand ist das zweite elektrische Verbindungselement 20 mit dem ersten elektrischen Verbindungselement 19 des Solardachziegels 1 verbunden. Das Start- oder Stoppelement 23 weist einen Anschluss 24 auf, welcher mit dem zweiten elektrischen Verbindungselement 20 über ein Kabel oder einen Leiterstrang 21 elektrisch leitend verbunden ist. Der Anschluss 24 ist bevorzugt als Stecker oder Buchse, insbesondere als Stopfbuchse ausgeführt. An den Anschluss 24 kann ein Kabel oder eine Leitung 25 angeschlossen werden, wobei durch das Kabel oder die Leitung 25 die fotovoltaische erzeugte elektrische Energie abgeführt wird oder wobei über das Kabel oder die Leitung 25 das Start- oder Stoppelement 23 mit einem Start- oder Stoppelement 23 einer anderen Reihe elektrisch verbunden wird.

Start- und Stoppelemente 23 können jedoch nicht nur gemeinsam mit Passivdachziegeln 22 verwendet werden, sondern auch dann, wenn am Beginn bzw. am Ende einer Reihe kein Passivdachziegel 22 vorgesehen ist.

Bevorzugt unterscheidet sich ein Startelement nicht von einem Stoppelement. Die Bezeichnung richtet sich danach, ob das Element am Beginn einer Reihe (Startelement) oder am Ende einer Reihe (Stoppelement) verwendet wird. Der Anfang einer Reihe wird dabei von dem Element gebildet, welches beim Verlegen der Reihe als erstes befestigt wird.

Es ist im Rahmen der Erfindung möglich, keine gesonderten Start- oder Stoppelemente 23 vorzusehen, sondern stattdessen Montageblöcke 10 mit zwei zweiten elektrischen Verbindungselementen 20 zu verwenden. Das zweite elektrische Verbindungselement 20, welches nicht mit einem ersten elektrischen Verbindungselement 19 eines Solardachziegels 1 verbunden wird, dient dann als Anschluss 24.

Bevorzugt wird jeweils ein Start- oder Stoppelement 23 am Beginn und am Ende einer jeden Reihe von Solardachziegeln 1 eingesetzt. Dadurch weist die Reihe zwei Anschlüsse 24 auf. Über die Anschlüsse 24 kann die Reihe mit weiteren Reihen verbunden werden. Ausserdem kann über die Anschlüsse 24 fotovoltaische erzeugte Energie abgeführt werden.

Zum Herstellen eines Solardachs unter Verwendung einer erfindungsgemässen Solardachabdeckung 100 kann bevorzugt nach folgendem Verfahren vorgegangen werden:
Zunächst werden Dachlatten 11, welche bevorzugt eine Nut 14 aufweisen, parallel zueinander in regelmässigen Abständen auf dem Unterdach befestigt. Dies geschieht auf die gleiche Weise, wie es auch beim Verlegen konventioneller Dachziegel üblich ist. Zum Einhalten der Abstände zwischen den Dachlatten 11 wird bevorzugt eine Distanzlehre verwendet.

Bevorzugt werden nun die Hauptanschlusskabel, die bevorzugt von einem Wechselrichter ausgehen, zum Startpunkt bzw. zum Endpunkt des mit Solardachziegel 1 zu deckenden Feldes gelegt. Die Hauptanschlusskabel können aber auch zu einem anderen Zeitpunkt verlegt werden.

An einer Dachlatte 11 werden ein Startelement 23 und ein Montageblock 10 befestigt. Bevorzugt wird dafür die zweite Dachlatte von unten gewählt. Der Abstand zwischen dem Startelement 23 und dem Montageblock 10 entspricht bevorzugt etwa einem Dachziegelabstand.

Der erste Solardachziegel 1 kann nun angebracht werden. Dazu wird der Solardachziegel 1 bevorzugt mittels der Niederhalter 6 an der untersten Dachlatte 11 eingehängt, beispielsweise indem die Niederhalter 6 in die Nut 14 der untersten Dachlatte 11 eingreifen. Die ersten mechanischen Verbindungselemente 7 dieses Solardachziegels 1 werden mit jeweils einem der zweiten mechanischen Verbindungselemente 18 des Start- oder Stoppelements 23 und des Montageblocks 10 verbunden. Durch die seitliche Verschiebbarkeit des Start- oder Stoppelements 23 und des Montageblocks 10 gelingt dies leicht. Bevorzugt werden der erste Solardachziegel 1 gemeinsam mit dem Startelement 23 und dem Montageblock 10 erforderlichenfalls durch seitliches Verschieben entlang der Dachlatte 11 positioniert.

Nun wird ein zweiter Montageblock 10 an der Dachlatte 11 befestigt. Danach kann ein zweiter Solardachziegel 1 auf die beschriebene Weise angebracht werden. Dazu werden dessen mechanische Verbindungselemente 7 und dessen elektrische Verbindungselemente 19 mit mechanischen Verbindungselementen 18 und elektrischen Verbindungselementen 20 des ersten und des zweiten Montageblocks 10 verbunden. Durch den ersten Montageblock 10 sind der erste Solardachziegel 1 und der zweite Solardachziegel 1 miteinander elektrisch leitend verbunden. Nun können der Reihe nach weitere Montageblöcke 10 und weitere Solardachziegel 1 angebracht werden. Dies wird wiederholt, bis das Ende der Reihe erreicht ist. Das Ende der Reihe kann beispielsweise durch die Breite des Daches oder durch eine bauliche Einrichtung (Dachfenster, Schornsteine etc.) vorgegeben sein. Statt eines Montageblocks 10 wird am Ende der Reihe ein Stoppelement 23 verwendet. Vom Anschluss 24 dieses Stoppelements wird beispielsweise ein Kabel zum Anschluss 24 des Startelements 23 der nächsten Reihe gezogen. In der nächsten Reihe bzw. den nächsten Reihen werden Start- und Stoppelemente 23, Montageblöcke 10 und Solardachziegel 1 auf die für die erste Reihe beschriebene Weise angebracht. Soweit gewünscht oder erforderlich können zusätzlich zu den Solardachziegeln 1 Passivdachziegel 22 eingesetzt werden.

In den Figuren 1 bis 7 sind beispielhaft schindelförmige Solardachziegel 1, d.h. im Wesentlichen flache Solardachziegel 1 mit im Wesentlichen rechteckiger Grundfläche dargestellt. Solardachziegel 1 mit dieser Form stellen ein bevorzugtes Ausführungsbeispiel der Erfindung dar. Erfindungsgemäss können die Solardachziegel 1 jedoch auch eine andere Form aufweisen, beispielsweise die Form von Dachpfannen oder Biberschwanz-Dachziegeln.

## Patentansprüche

1. Solardachabdeckung zum Befestigen auf einem Dachtragwerk, insbesondere zum Ausbilden eines regendichten Solardachs, umfassend:
- eine Mehrzahl von Solardachziegeln (1), die jeweils eine fotovoltaische Zelle (8) oder ein fotovoltaisches Modul aufweisen, sowie
- eine Mehrzahl von Montageblöcken (10),
**wobei** zum Befestigen der Solardachabdeckung auf dem Dachtragwerk die Montageblöcke (10) mit dem Dachtragwerk und die Solardachziegel (1) mit den Montageblöcken (10) verbindbar sind,
**wobei** zum Befestigen der Solardachabdeckung auf dem Dachtragwerk zumindest ein Teil der Solardachziegel (1) so mit den Montageblöcken (10) verbindbar ist, dass jeweils zwei Solardachziegel (1) mit demselben Montageblock (10) eine mechanische und elektrische Verbindung eingehen,
**wobei** mindestens ein Teil der Solardachziegel (1) jeweils mindestens ein mechanisches Verbindungselement (7, 71, 72) und mindestens einen auf der der fotovoltaischen Zelle (8) oder dem fotovoltaischen Modul gegenüberliegenden Seite angeordneten Niederhalter aufweist,
**wobei** der Niederhalter ausgebildet ist, mit einer Dachlatte (11) und/oder einem Rand eines anderen Solardachziegels (1) in Eingriff gebracht zu werden,
**wobei** mindestens ein Teil der Montageblöcke (10) jeweils mindestens ein mechanisches Verbindungselement (18, 181, 182) aufweist,
**wobei** zum mechanischen Verbinden eines Solardachziegels (1) und eines Montageblocks (10) das mindestens eine mechanische Verbindungselement (7, 71, 72) des Solardachziegels (1) und das mindestens eine mechanische Verbindungselement (18, 181, 182) des Montageblocks (10) zusammenwirken,
**wobei** die mechanischen Verbindungselemente (7, 71, 72, 18, 181, 182) Steckverbindungselemente und/oder Schnappverbindungselemente sind.

2. Solardachabdeckung gemäss Anspruch 1,
**wobei** die Montageblöcke (10) ausgebildet sind, mit dem Dachtragwerk verbunden zu werden, indem die Montageblöcke (10) mit einer Dachlatte (11) des Dachtragwerks verbunden werden.

3. Solardachabdeckung gemäss einem der Ansprüche 1 bis 2, **wobei** zwei Solardachziegel (1), die mit demselben Montageblock (10) eine mechanische und elektrische Verbindung aufweisen, elektrisch in Serie geschaltet sind.

4. Solardachabdeckung gemäss einem der Ansprüche 1 bis 3, **wobei** zumindest ein Teil der Solardachziegel (1) eine zur fotovoltaischen Zelle (8) oder zum fotovoltaischen Modul parallel geschaltete Freilaufdiode aufweist, um die fotovoltaische Zelle (8) oder das fotovoltaische Modul vor auftretenden Überspannungen zu schützen und/oder um Leistungsverluste bei Teilabschattung der Solardachabdeckung und/oder bei teilweiser Funktionsstörung der fotovoltaischen Zellen (8) bzw. Module zu verhindern.

5. Solardachabdeckung gemäss einem der Ansprüche 1 bis 4, **wobei** der Solardachziegel (1) mindestens zwei erste mechanische Verbindungselemente (7, 71, 72) aufweist und der Montageblock (10) mindestens zwei dazu komplementäre zweite mechanische Verbindungselemente (18, 181, 182) aufweist.

6. Solardachabdeckung gemäss Anspruch 1,
**wobei** jeweils auf der der fotovoltaischen Zelle (8) oder dem fotovoltaischen Modul gegenüberliegenden Seite zumindest eines Teils der Solardachziegel (1) mindestens zwei erste mechanische Verbindungselemente (7, 71, 72) angeordnet sind,
**wobei** zumindest ein Teil der Montageblöcke (10) mindestens zwei zweite, zu den ersten mechanischen Verbindungselementen (7, 71, 72) komplementäre mechanische Verbindungselemente (18, 181, 182) aufweist und
**wobei** jeweils zwei Solardachziegel (1) mit einem Montageblock (10) mechanisch verbindbar sind, indem ein erstes mechanisches Verbindungselement (7, 71, 72) der einen der zwei Solardachziegel (1) und ein erstes mechanisches Verbindungselement (7) der anderen der zwei Solardachziegel (1) mit komplementären zweiten mechanischen Verbindungselementen (18, 181, 182) desselben Montageblocks (10) verbunden werden.

7. Solardachabdeckung gemäss einem der Ansprüche 1 bis 6,
**wobei** mindestens ein Teil der Solardachziegel (1) und mindestens ein Teil der Montageblöcke (10) jeweils elektrische Verbindungselemente (19, 20) aufweisen, die zum elektrischen Verbinden von Solardachziegeln (1) und Montageblöcken (10) zusammenwirken,
**wobei** zum elektrischen Verbinden eines Solardachziegels (1) und eines Montageblocks (10) das mindestens ein elektrisches Verbindungselement (19) des Solardachziegels (1) und das mindestens ein elektrisches Verbindungselement (20) des Montageblocks (10) zusammenwirken.

8. Solardachabdeckung gemäss Anspruch 7,
**wobei** jeweils auf der der fotovoltaischen Zelle (8) bzw. dem fotovoltaischen Modul gegenüberliegenden Seite zumindest eines Teils der Solardachziegel (1) mindestens zwei erste elektrische Verbindungselemente (19) angeordnet sind,
**wobei** zumindest ein Teil der Montageblöcke (10) mindestens zwei zweite elektrische Verbindungselemente (20) aufweist, die zu den ersten elektrische Verbindungselementen (19) komplementär sind, und
**wobei** jeweils zwei Solardachziegel (1) mit einem Montageblock (10) elektrisch verbindbar sind, indem ein erstes elektrisches Verbindungselement (19) der einen der zwei Solardachziegel (1) und ein erstes elektrisches Verbindungselement (19) der anderen der zwei Solardachziegel (1) mit komplementären zweiten elektrischen Verbindungselementen (20) desselben Montageblocks (10) verbunden werden.

9. Solardachabdeckung gemäss einem der Ansprüche 7 bis 8, **wobei** die elektrischen Verbindungselemente (19, 20) der Solardachziegel (1) und/oder der Montageblöcke (10) in die mechanischen Verbindungselemente (7, 71, 72, 18, 181, 182) integriert sind.

10. Solardachabdeckung gemäss einem der Ansprüche 1 bis 9,
**wobei** zumindest ein Teil der Solardachziegel (1) eine Grundplatte (2) und eine zumindest teilweise lichtdurchlässige Deckplatte (9) aufweist,
**wobei** die fotovoltaische Zelle (8) oder das fotovoltaische Modul zwischen Grundplatte (2) und Deckplatte (9) angeordnet ist.

11. Solardachabdeckung gemäss einem der Ansprüche 1 bis 10,
**wobei** beim Befestigen der Solardachabdeckung auf dem Dachtragwerk mindestens eine Reihe gebildet wird, die mindestens zwei, insbesondere mehr als zwei Solardachziegel und mindestens einen, insbesondere mehr als einen Montageblock (10) umfasst,
**wobei** der erste und die zweite der Solardachziegel (1) der Reihe mit dem ersten der Montageblöcke (10) der Reihe elektrisch und mechanisch verbunden sind,
**wobei** der vorletzte und die letzte der Solardachziegel (1) der Reihe mit dem letzten der Montageblöcke (10) der Reihe elektrisch und mechanisch verbunden sind,
**wobei** die jeweils benachbarten Solardachziegel (1) der Reihe mit einem Montageblöcke (10) der Reihe elektrisch und mechanisch verbunden sind.

12. Solardachabdeckung gemäss Anspruch 11,
**wobei** der erste Solardachziegel (1) der Reihe mit einem Startelement (23) mechanisch und elektrisch verbunden ist und der letzte Solardachziegel (1) mit einem Stoppelement (23) mechanisch und elektrisch verbunden ist und Startelement (23) und Stoppelement (23) jeweils eine elektrische Anschlussstelle der Serie der elektrisch in Serie geschalteten Solardachziegel (1) aufweisen.

13. Solardachabdeckung gemäss einem der Ansprüche 1 bis 12,
**wobei** die Solardachabdeckung neben Solardachziegeln (1) auch Passivdachziegel (22) ohne fotovoltaische Zelle (8) und ohne fotovoltaisches Modul umfasst,
**wobei** die Passivdachziegel (22) wie Solardachziegel (1) mit Montageblöcken (10) verbindbar sind und beliebig zugeschnitten werden können.

## Claims

1. A solar roof covering for mounting on a roof support structure, in particular for forming a rainproof solar roof, comprising:
- a plurality of solar roof tiles (1), which respectively comprise a photovoltaic cell (8) or a photovoltaic module, and
- a plurality of mounting blocks (10),
wherein, in order to mount the solar roof covering on the roof support structure, the mounting blocks (10) are connectable to the roof support structure and the solar roof tiles (1) are connectable to the mounting blocks (10),
wherein, in order to mount the solar roof covering on the roof support structure, at least a part of the solar roof tiles (1) is connectable to the mounting blocks (10) in such a manner that two solar roof tiles (1) respectively form a mechanical and electrical connection with the same mounting block (10), wherein at least a part of the solar roof tiles (1) respectively comprises at least one mechanical connecting element (7, 71, 72) and at least one retaining device arranged on the side opposite the photovoltaic cell (8) or the photovoltaic module, wherein the retaining device is configured to be engaged with a roof slat (11) and/or an edge of another solar roof tile (1),
wherein at least a part of the mounting blocks (10) respectively comprise at least one mechanical connecting element (18, 181, 182),
wherein, for the mechanical connection of a solar roof tile (1) and a mounting block (10), the at least one mechanical connecting element (7, 71, 72) of the solar roof tile (1) and the at least one mechanical connecting element (18, 181, 182) of the mounting block (10) interact,
wherein the mechanical connecting elements (7, 71, 72, 18, 181, 182) are plug-in connecting elements and/or snap-in connecting elements.

2. The solar roof covering according to claim 1,
wherein the mounting blocks (10) are configured to be connected to the roof support structure by connecting the mounting blocks (10) to a roof slat (11) of the roof support structure.

3. The solar roof covering according to one of claims 1 to 2,
wherein two solar roof tiles (1) comprising a mechanical and electrical connection to the same mounting block (10) are electrically connected in series.

4. The solar roof covering according to one of claims 1 to 3,
wherein at least a part of the solar roof tiles (1) comprises a freewheeling diode connected in parallel with the photovoltaic cell (8) or the photovoltaic module in order to protect the photovoltaic cell (8) or the photovoltaic module from potential overvoltages and/or in order to prevent power losses in the event of partial overshadowing of the solar roof covering and/or in the event of partial functional failure of the photovoltaic cells (8) or modules.

5. The solar roof covering according to one of claims 1 to 4,
wherein the solar roof tile (1) comprises at least two first mechanical connecting elements (7, 71, 72) and the mounting block (10) comprises at least two second mechanical connecting elements (18, 181, 182) complementary to the first.

6. The solar roof covering according to claim 1,
wherein at least two first mechanical connecting elements (7, 71, 72) are respectively arranged on the opposite side of at least a part of the solar roof tiles (1) relative to the photovoltaic cell (8) or the photovoltaic module,
wherein at least a part of the mounting blocks (10) comprises at least two second mechanical connecting elements (18, 181, 182) complementary to the first mechanical connecting elements (7, 71, 72), and wherein two solar roof tiles (1) are respectively mechanically connectable to a mounting block (10) by connecting a first mechanical connecting element (7, 71, 72) of one of the two solar roof tiles (1) and a first mechanical connecting element (7) of the other of the two solar roof tiles (1) to complementary second mechanical connecting elements (18, 181, 182) of the same mounting block (10).

7. The solar roof covering according to one of claims 1 to 6,
wherein at least a part of the solar roof tiles (1) and at least a part of the mounting blocks (10) respectively comprise electrical connecting elements (19, 20), which interact in order to electrically connect the solar roof tiles (1) and mounting blocks (10),
wherein, for the electrical connection of a solar roof tile (1) and a mounting block (10), the at least one electrical connecting element (19) of the solar roof tile (1) and the at least one electrical connecting element (20) of the mounting block (10) interact.

8. The solar roof covering according to claim 7,
wherein at least two first electrical connecting elements (19) are respectively arranged on the opposite side of at least a part of the solar roof tiles (1) relative to the photovoltaic cell (8) or the photovoltaic module,
wherein at least a part of the mounting blocks (10) comprises at least two second electrical connecting elements (20) which are complementary to the first electrical connecting elements (19), and
wherein two solar roof tiles (1) are respectively electrically connectable to a mounting block (10) by connecting a first electrical connecting element (19) of one of the two solar roof tiles (1) and a first electrical connecting element (19) of the other of the two solar roof tiles (1) to complementary second electrical connecting elements (20) of the same mounting block (10).

9. The solar roof covering according to one of claims 7 to 8,
wherein the electrical connecting elements (19, 20) of the solar roof tiles (1) and/or of the mounting blocks (10) are integrated into the mechanical connecting elements (7, 71, 72, 18, 181, 182).

10. The solar roof covering according to one of claims 1 to 9,
wherein at least a part of the solar roof tiles (1) comprises a base plate (2) and an at least partially translucent cover plate (9),
wherein the photovoltaic cell (8) or the photovoltaic module is arranged between the base plate (2) and the cover plate (9).

11. The solar roof covering according to one of claims 1 to 10, wherein at least one row comprising at least two, in particular more than two solar roof tiles and at least one, in particular more than one mounting block (10) is formed when the solar roof covering is mounted on the roof structure,
wherein the first and the second solar roof tiles (1) of the row are electrically and mechanically connected to the first mounting block (10) of the row,
wherein the penultimate and the last solar roof tiles (1) of the row are electrically and mechanically connected to the last mounting block (10) of the row, wherein the respectively adjacent solar roof tiles (1) of the row are electrically and mechanically connected to one of the mounting blocks (10) of the row.

12. The solar roof covering according to claim 11,
wherein the first solar roof tile (1) of the row is mechanically and electrically connected to a start element (23) and the last solar roof tile (1) is mechanically and electrically connected to a stop element (23), and the start element (23) and the stop element (23) respectively comprise an electrical connection point of the series of solar roof tiles (1) connected electrically in series.

13. The solar roof covering according to one of claims 1 to 12,
wherein the solar roof covering, in addition to solar roof tiles (1), also comprises passive roof tiles (22) without a photovoltaic cell (8) and without a photovoltaic module,
wherein the passive roof tiles (22) are connectable to mounting blocks (10) like solar roof tiles (1) and can be cut to any size.

## Revendications

1. Couverture de toit solaire pour la fixation sur une ossature porteuse de toit, en particulier pour la formation d'un toit solaire étanche à la pluie, comprenant :
- une pluralité de tuiles de toit solaire (1) qui présentent respectivement une cellule photovoltaïque (8) ou un module photovoltaïque, ainsi
- qu'une pluralité de blocs de montage (10),
dans laquelle, pour la fixation de la couverture de toit solaire sur l'ossature porteuse de toit, les blocs de montage (10) peuvent être reliés à l'ossature porteuse de toit et les tuiles de toit solaire (1) aux blocs de montage (10),
dans laquelle, pour la fixation de la couverture de toit solaire sur l'ossature porteuse de toit, au moins une partie des tuiles de toit solaire (1) peuvent être reliées aux blocs de montage (10) de telle sorte que respectivement deux tuiles de toit solaire (1) forment, avec le même bloc de montage (10), une liaison mécanique et électrique,
dans laquelle au moins une partie des tuiles de toit solaire (1) présentent respectivement au moins un élément de liaison mécanique (7, 71, 72) et au moins un serre-flan disposé sur le côté situé en vis-à-vis de la cellule photovoltaïque (8) ou du module photovoltaïque,
dans laquelle le serre-flan est réalisé pour être mis en prise avec une latte de toit (11) et/ou un bord d'une autre tuile de toit solaire (1),
dans laquelle au moins une partie des blocs de montage (10) présentent respectivement au moins un élément de liaison mécanique (18, 181, 182),
dans laquelle, pour la liaison mécanique entre une tuile de toit solaire (1) et un bloc de montage (10), l'au moins élément de liaison mécanique (7, 71, 72) de la tuile de toit solaire (1) et l'au moins un élément de liaison mécanique (18, 181, 182) du bloc de montage (10) coopèrent,
dans laquelle les éléments de liaison mécanique (7, 71, 72, 18, 181, 182) sont des éléments de liaison à enfichage et/ou des éléments de liaison à encliquetage.

2. Couverture de toit solaire selon la revendication 1, dans laquelle les blocs de montage (10) sont réalisés pour être reliés à l'ossature porteuse de toit en ce que les blocs de montage (10) sont reliés à une latte de toit (11) de l'ossature porteuse de toit.

3. Couverture de toit solaire selon l'une des revendications 1 à 2,
dans laquelle deux tuiles de toit solaire (1) qui présentent une liaison mécanique et électrique au même bloc de montage (10) sont connectées électriquement en série.

4. Couverture de toit solaire selon l'une des revendications 1 à 3,
dans laquelle au moins une partie des tuiles de toit solaire (1) présentent une diode de roue libre connectée en parallèle à la cellule photovoltaïque (8) ou au module photovoltaïque pour protéger la cellule photovoltaïque (8) ou le module photovoltaïque contre des surtensions qui apparaissent et/ou pour empêcher des pertes de puissance en cas d'ombrage partiel de la couverture de toit solaire et/ou en cas perturbation partielle du fonctionnement des modules ou cellules photovoltaïques (8).

5. Couverture de toit solaire selon l'une des revendications 1 à 4,
dans laquelle la tuile de toit solaire (1) présente au moins deux premiers éléments de liaison mécanique (7, 71, 72) et le bloc de montage (10) présente au moins deux deuxièmes éléments de liaison mécanique (18, 181, 182) complémentaires à ceux-ci.

6. Couverture de toit solaire selon la revendication 1,
dans laquelle, respectivement sur le côté situé en vis-à-vis de la cellule photovoltaïque (8) ou du module photovoltaïque d'au moins une partie des tuiles de toit solaire (1), au moins deux premiers éléments de liaison mécanique (7, 71, 72) sont disposés,
dans laquelle au moins une partie des blocs de montage (10) présentent au moins deux deuxièmes éléments de liaison mécaniques (18, 181, 182) complémentaires aux premiers éléments de liaison mécanique (7, 71, 72), et dans laquelle respectivement deux tuiles de toit solaire (1) peuvent être reliées mécaniquement à un bloc de montage (10) en ce qu'un premier élément de liaison mécanique (7, 71, 72) de l'une des deux tuiles de toit solaire (1) et un premier élément de liaison mécanique (7) de l'autre des deux tuiles de toit solaire (1) sont reliés à des deuxièmes éléments de liaison mécanique (18, 181, 182) complémentaires du même bloc de montage (10).

7. Couverture de toit solaire selon l'une des revendications 1 à 6,
dans laquelle au moins une partie des tuiles de toit solaire (1) et au moins une partie des blocs de montage (10) présentent respectivement des éléments de liaison électriques (19, 20), lesquels coopèrent pour relier électriquement des tuiles de toit solaire (1) et des blocs de montage (10),
dans laquelle, pour la liaison électrique entre une tuile de toit solaire (1) et un bloc de montage (10), l'au moins un élément de liaison électrique (19) de la tuile de toit solaire (1) et l'au moins un élément de liaison électrique (20) du bloc de montage (10) coopèrent.

8. Couverture de toit solaire selon la revendication 7,
dans laquelle, respectivement sur le côté situé en vis-à-vis de la cellule photovoltaïque (8) ou du module photovoltaïque d'au moins une partie des tuiles de toit solaire (1), au moins deux premiers éléments de liaison électrique (19) sont disposés,
dans laquelle au moins une partie des blocs de montage (10) présentent au moins deux deuxièmes éléments de liaison électrique (20) qui sont complémentaires aux premiers éléments de liaison électriques (19), et dans laquelle respectivement deux tuiles de toit solaire (1) peuvent être reliées électriquement à un bloc de montage (10) en ce qu'un premier élément de liaison électrique (19) de l'une des deux tuiles de toit solaire (1) et un premier élément de liaison électrique (19) de l'autre des deux tuiles solaires (1) sont reliés à des deuxièmes éléments de liaison électrique (20) complémentaires du même bloc de montage (10).

9. Couverture de toit solaire selon l'une des revendications 7 à 8,
dans laquelle les éléments de liaison électrique (19, 20) des tuiles de toit solaire (1) et/ou des blocs de montage (10) sont intégrés dans les éléments de liaison mécanique (7, 71, 72, 18, 181, 182).

10. Couverture de toit solaire selon l'une des revendications 1 à 9,
dans laquelle au moins une partie des tuiles de toit solaire (1) présentent une plaque de base (2) et une plaque de couverture (9) laissant au moins partiellement traverser la lumière,
dans laquelle la cellule photovoltaïque (8) ou le module photovoltaïque est disposé(e) entre la plaque de base (2) et la plaque de couverture (9).

11. Couverture de toit solaire selon l'une des revendications 1 à 10,
dans laquelle, lors de la fixation de la couverture de toit solaire sur l'ossature porteuse de toit, au moins une rangée est formée, laquelle comprend au moins deux, en particulier plus de deux tuiles de toit solaire et au moins un, en particulier plus d'un bloc de montage (10),
dans laquelle la première et la deuxième des tuiles de toit solaire (1) de la rangée sont reliées électriquement et mécaniquement au premier des blocs de montage (10) de la rangée,
dans laquelle l'avant-dernière et la dernière des tuiles de toit solaire (1) de la rangée sont reliées électriquement et mécaniquement au dernier des blocs de montage (10) de la rangée,
dans laquelle les tuiles de toit solaire (1) respectivement voisines de la rangée sont reliées électriquement et mécaniquement à l'un des blocs de montage(10) de la rangée.

12. Couverture de toit solaire selon la revendication 11, dans laquelle la première tuile de toit solaire (1) de la rangée est reliée mécaniquement et électriquement à un élément de début (23) et la dernière tuile de toit solaire (1) est reliée mécaniquement et électriquement à un élément d'arrêt (23), et l'élément de début (23) et l'élément d'arrêt (23) présentent respectivement un point de raccordement électrique de la série des tuiles de toit solaire (1) connectées électriquement en série.

13. Couverture de toit solaire selon l'une des revendications 1 à 12,
dans laquelle la couverture de toit solaire comprend, en plus des tuiles de toit solaire (1), également des tuiles de toit passives (22) sans cellule photovoltaïque (8) et sans module photovoltaïque,
dans laquelle les tuiles de toit passives (22) peuvent être reliées, comme des tuiles de toit solaire (1), à des blocs de montage (10) et être librement taillées sur mesure.
